# EUROPÄISCHE PATENTSCHRIFT

(11) **EP 1 656 805 B1**
(45) Veröffentlichungstag und Bekanntmachung des Hinweises auf die Patenterteilung: **18.11.2009**
(21) Anmeldenummer: 03818688.8
(22) Anmeldetag: 20.08.2003
(51) Int. Cl.: H04W 8/24

(54) **FERNABFRAGE UND FERNWARTUNG EINES KOMMUNIKATIONSMODULS**
REMOTE QUERY AND REMOTE MAINTENANCE OF A COMMUNICATIONS MODULE
CONSULTATION A DISTANCE ET TELESURVEILLANCE D'UN MODULE DE COMMUNICATION

(43) Veröffentlichungstag der Anmeldung: 17.05.2006
(73) Patentinhaber: Cinterion Wireless Modules GmbH, 81669 München (DE)
(72) Erfinder: DEHM, Christoph, 13629 Berlin (DE)
(74) Vertreter: Eisenführ, Speiser & Partner
(86) Internationale Anmeldenummer: PCT/EP2003/009230
(87) Internationale Veröffentlichungsnummer: WO 2005/029893

(56) Entgegenhaltungen:
- US-A- 5 765 021
- US-A1- 2002 112 047
- US-B1- 6 240 365

## Beschreibung

Die Erfindung betrifft ein Verfahren und eine Vorrichtung zum Abfragen von Daten mit einem Datenruf zwischen einer Dienste-Einrichtung und einem Kommunikationsmodul über ein Kommunikationsnetz.

Die US 2002/0112047 A1 beschreibt ein Verfahren, ein System und ein Computer-Programm-Produkt mit der Fähigkeit ein Mobilfunkgerät über ein Mobilfunknetz zu steuern, zu kontrollieren und zu konfigurieren. Dieses Mobilfunknetz besitzt einen Server und das Mobilfunkgerät. Es wird eine Kommunikationsverbindung zwischen dem Server und dem Mobilfunkgerät über die Kommunikationsverbindung gesandt, welches vom Mobilfunkgerät ausgeführt wird.

Kommunikationsmodule werden unter anderem in Automobile, Maschinen und Anlagen eingebaut, die nicht direkt unter Personenaufsicht stehen und eventuell fern abgelegen installiert sind. Ein Kommunikationsmodul kann dabei zum Beispiel ein Mobilfunkmodul in einem zellularen Kommunikationsnetz sein. Funktionalitäten, wie zum Beispiel Telefonieren über die Freisprecheinrichtung, Auto-PCs mit ständigem Zugriff auf Internet oder Intranet, Fax, Flottenmanagement, automatischer Notruf, Diagnosefunktionen, dynamische Navigation, ortsabhängige Informationsdienste, Onboard-Spiele und MP3-Downloads können mit einem solchen Mobilfunkmodul angeboten werden. Wartungsarbeiten für die Instandhaltung solcher Kommunikationsmodule können sich sehr aufwendig gestalten, da der direkte Zugang für eine Datenverbindung meist fehlt. Eine Fernwartung eines Kommunikationsmoduls kann derzeit nur durch eine zusätzliche Schaltung in Form eines externen Mikrocontrollers durchgeführt werden.

Aufgabe der vorliegenden Erfindung ist es eine effiziente und kostengünstige Möglichkeit zur Abfrage bzw. zur Fernwartung eines Kommunikationsmoduls vorzuschlagen.

Die Aufgabe wird erfindungsgemäß durch die Gegenstände der unabhängigen Patentansprüche gelöst. Weiterbildungen der Erfindung sind in den Unteransprüchen angegeben. Eine von einer Dienste-Einrichtung über das Kommunikationsnetz gesendete Daten-Abfrage wird von einer ersten Schnittstellen-Einheit an eine weitere Schnittstellen-Einheit eines Kommunikationsmoduls weitergeleitet. Dort wird die Daten-Abfrage in mindestens ein Steuerkommando interpretiert. Eine Auswerteinheit erstellt für die Daten-Abfrage gemäß des Interpretationsergebnisses Antwort-Daten, die über die erste Schnittstellen-Einheit an die Dienste-Einrichtung gesendet werden. Eine Dienste-Einrichtung kann dabei zum Beispiel eine zentrale Wartungs- und Instandhaltungsstelle eines Betreibers der Kommunikationsmodule sein. Ein Vorteil dieser Lösung besteht darin, dass keine weiteren elektronischen Bauteile, wie zum Beispiel ein externer Mikrocontroller, notwendig sind um das Kommunikationsmodul anzusteuern und dass damit eine sehr kosteneffektive Lösung erzielt werden kann. Ausserdem kann unter Verwendung der vorgeschlagenen Lösung die Wartung und Instandhaltung eines Kommunikationsmoduls von einer zentralen Einrichtung erledigt werden. Ein weiterer Vorteil besteht darin, dass auf einfache Art und Weise eine Ortsbestimmung des Kommunikationsmoduls möglich ist.

Die Erfindung wird anhand eines in einer Figur dargestellten Ausführungsbeispiels näher erläutert. Dabei zeigt
- Figur 1: eine erfindungsgemäße Lösungsvariante mit seriell gekreuzter Datenverbindung,
- Figur 2: eine erfindungsgemäße Lösungsvariante mit Simulationseinrichtung für eine weitere Schnittstellen-Einheit.

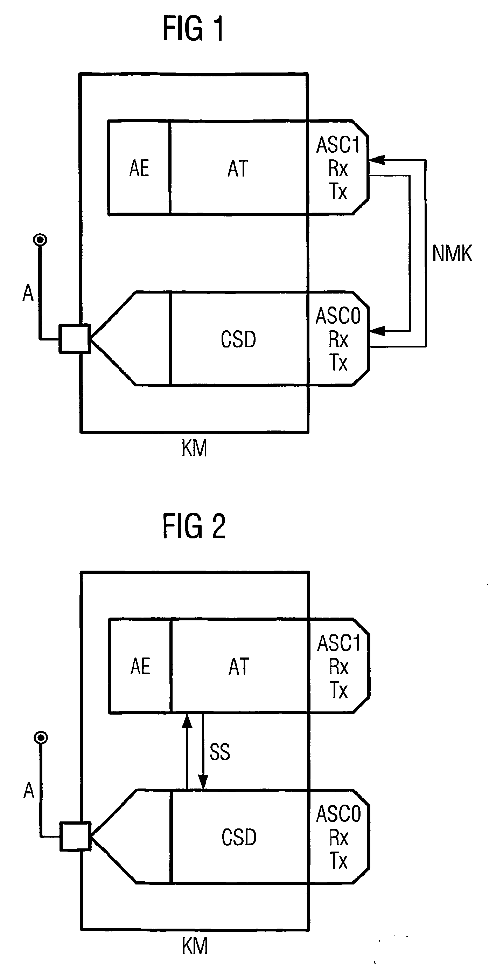

Figur 1 zeigt eine erfindungsgemäße Lösungsvariante mit seriell gekreuzter Datenverbindung NMK, wie zum Beispiel einem sogenannten Null-Modem-Kabel (seriell gekreuzte Datenverbindung). Eine Daten-Abfrage mit einem Datenruf von einer Dienste-Einrichtung wird über eine Antenne A von einer ersten Schnittstellen-Einheit CSD eines Kommunikationsmoduls KM empfangen. Ein Kommunikationsmodul kann dabei ein Mobilfunkmodul für ein zellulares Kommunikationsnetz sein. Dabei könnte ein Time Division Multiple Access (TDMA)-, ein Code Division Multiple Access (CDMA) - und/oder ein Java-fähiges Modul verwendet werden, das sich in ein Mobilfunknetz einbuchen kann. Aber auch Kommunikationsmodule, wie zum Beispiel ein ISDN-, ein DECT- und/oder ein HSCSD-Modul, die sich in ein Festnetz einbuchen können, könnten verwendet werden. Ähnliche Kommunikationsmodule sind ebenso denkbar. Der von einer Dienste-Einrichtung kommende Datenruf wird dabei vom Kommunikationsmodul KM durch automatische Rufannahme angenommen. Ein leitungsvermittelter Datenruf wird in vielen Mobilfunkendgeräten angeboten und wird dort als CSD-Ruf (Circuit Switched Data) bezeichnet, während ein leitungsvermittelter Sprachruf als CSS-Ruf (Circuit Switched Speech) bezeichnet wird. Daten-Abfragen können sich auf den Ort des Kommunikationsmoduls, den Batteriestand, die Signalstärke, Telefonbucheinträge, Temperaturwerte, Betriebsparameter etc. beziehen. Auch können Zellen- und Nachbarzelleninformationen von einer Dienste-Einrichtung abgefragt werde, die dann zum Beispiel von Trackingsystemen ausgewertet werden können. Über eine seriell gekreuzte Datenverbindung NMK wird die Daten-Abfrage von der ersten Schnittstellen-Einheit CSD mit dem Anschluss ASC0 an eine weitere Schnittstellen-Einheit AT mit dem Anschluss ASC1 weitergeleitet. In der weiteren Schnittstellen-Einheit AT wird die Daten-Abfrage in mindestens ein Steuerkommando interpretiert. Gemäß dem Interpretationsergebnis kann dann eine Auswerteinheit AE eine Daten-Antwort über die erste Schnittstellen-Einheit CSD an die abfragende Dienste-Einheit senden. Die Auswerteinheit AE, wie zum Beispiel ein Mikrocontroller, kann dabei in der weiteren Schnittstellen-Einheit AT integriert sein oder eine eigenständige Einheit in einem Kommunikationsmodul KM sein.

Figur 2 zeigt eine Lösungsvariante mit Simulationseinrichtung SS einer weiteren Schnittstellen-Einheit AT. Der Unterschied zu Figur 1 besteht darin, dass statt der seriell gekreuzten Datenverbindung NMK die weitere Schnittstellen-Einheit AT in einer Einrichtung SS simuliert wird. Dabei kann die Simulationseinrichtung SS der weiteren Schnittstellen-Einheit AT in die Software des Kommunikationsmoduls KM integriert sein. Dazu sind Änderungen des Quellcodes des Kommunikationsmoduls KM notwendig, die erst durch die Definition eines neuen Leistungsmerkmals (zusätzliche Konfigurationsmöglichkeit) in die Entwicklung einfließen könnte. Eine Lösung könnte sein, dass das Weiterleiten eines Datenstroms auf die weitere Schnittstellen-Einheit AT nur für speziell zuvor eingerichtete Rufnummern erlaubt wird, so dass diese Funktion nur dann aktiv wird, wenn die Dienste-Einrichtung das Kommunikationsmodul KM anruft.

## Patentansprüche

1. Verfahren zum Abfragen von Daten mit einem Datenruf zwischen einer Dienste-Einrichtung und einem Kommunikationsmodul (KM) über ein Kommunikationsnetz,
**dadurch gekennzeichnet,**
**dass** eine von einer Dienste-Einrichtung gesendete über das Kommunikationsnetz empfangene Daten-Abfrage von einer ersten Schnittstellen-Einheit (CSD) an eine weitere Schnittstellen-Einheit (AT) des Kommunikations-Moduls weitergeleitet wird, dass die Daten-Abfrage in der weiteren Schnittstellen-Einheit (AT) interpretiert und das Interpretierergebnis von einer Auswerteinheit (AE) ausgewertet wird und
**dass** Antwort-Daten für die Daten-Abfrage gemäß dem Interpretationsergebnis von der Auswerteinheit über die erste Schnittstellen-Einheit (CSD) an die Dienste-Einrichtung gesendet werden.

2. Verfahren nach Anspruch 1,
**dadurch gekennzeichnet,**
**dass** von der weiteren Schnittstelle (AT) für die Auswertung die Daten-Abfrage in mindestens ein Steuerkommando interpretiert wird.

3. Verfahren nach einem der vorhergehenden Ansprüche,
**dadurch gekennzeichnet,**
**dass** ein von der Dienste-Einrichtung kommender Datenruf von einem Kommunikationsmodul (KM) durch automatische Rufannahme angenommen wird.

4. Verfahren nach einem der vorhergehenden Ansprüche,
**dadurch gekennzeichnet,**
**dass** die erste Schnittstellen-Einheit (CSD) mit der weiteren Schnittstellen-Einheit (AT) in einem Kommunikationsmodul (KM) über eine seriell gekreuzte Datenverbindung (NMK) verbunden ist.

5. Verfahren nach einem der vorhergehenden Ansprüche,
**dadurch gekennzeichnet,**
**dass** eine Simulationseinrichtung für die weitere Schnittstellen-Einheit (AT) in dem Kommunikationsmodul (KM) verwendet wird.

6. Verfahren nach einem der vorhergehenden Ansprüche,
**dadurch gekennzeichnet,**
**dass** als Auswerteinheit (AE) ein Mikrocontroller in dem Kommunikationsmodul (KM) verwendet wird.

7. Verfahren nach einem der vorhergehenden Ansprüche,
**dadurch gekennzeichnet,**
**dass** das Kommunikationsmodul (KM) ein Mobilfunkmodul für ein zellulares Kommunikationsnetz ist.

8. Verfahren nach Anspruch 7,
**dadurch gekennzeichnet,**
**dass** als Mobilfunkmodul ein Time Division Multiple Access (TDMA)-, Code Division Multiple Access (CDMA) - und/oder ein Java-fähiges Modul verwendet wird, das in ein Mobilfunknetz einbuchbar ist.

9. Verfahren nach einem der vorhergehenden Ansprüche,
**dadurch gekennzeichnet,**
**dass** das Kommunikationsmodul (KM) ein ISDN-, DECT-, HSCSD- und/oder ähnliches Modul eines Festnetzes ist.

10. Verfahren nach einem der vorhergehenden Ansprüche,
**dadurch gekennzeichnet,**
**dass** die weitere Schnittstellen-Einheit (AT) die Auswerteinheit (AE) umfasst.

11. Verfahren nach einem der vorhergehenden Ansprüche,
**dadurch gekennzeichnet,**
**dass** als Daten der Ort des Kommunikationsmoduls (KM), der Batteriestand, die Signalstärke und/oder Ähnliches abgefragt werden.

12. Vorrichtung (KM) zum Beantworten einer über ein Kommunikationsnetz ankommenden Datenabfrage einer Diente-Einrichtung mit einem Kommunikationsmodul (KM)
- mit einer ersten Schnittstelle (CSD) des Kommunikationsmoduls (KM) zum Empfangen einer von einer Dienste-Einrichtung gesendeten Daten-Abfrage und zum Weiterleiten der Daten-Abfrage an eine weitere Schnittstellen-Einheit (AT),
- mit der weiteren Schnittstellen-Einheit (AT) des Kommunikationsmoduls (KM) zum Interpretieren der Daten-Abfrage,
- mit einer Auswerteinheit (AE) zum Erstellen einer Daten-Antwort für die Daten-Abfrage gemäß dem Interpretationsergebnis und zum Senden der Daten-Antwort über die erste Schnittstellen-Einheit (CSD) an die Dienste-Einrichtung.

13. Vorrichtung nach Anspruch 12,
**dadurch gekennzeichnet,**
**dass** als Kommunikationsmodul (KM) ein Mobilfunkmodul für ein zellulares Kommunikationsnetz vorgesehen ist.

14. Vorrichtung nach einem der vorhergehenden Ansprüche,
**dadurch gekennzeichnet,**
**dass** die weitere Schnittstellen-Einheit (AT) zum Interpretieren der Daten-Abfrage in mindestens ein Steuerkommando vorgesehen ist.

15. Vorrichtung nach einem der vorhergehenden Ansprüche,
**dadurch gekennzeichnet,**
**dass** als Verbindung zwischen der ersten Schnittstellen-Einheit (CSD) und der weiteren Schnittstellen-Einheit (AT) in dem Kommunikationsmodul (KM) eine serielle gekreuzte Verbindung (NMK) vorgesehen ist.

16. Vorrichtung nach einem der vorhergehenden Ansprüche,
**dadurch gekennzeichnet,**
**dass** als weitere Schnittstellen-Einheit (AT) in dem Kommunikationsmodul (KM) eine Simulationseinrichtung (SS) vorgesehen ist.

17. Vorrichtung nach einem der vorhergehenden Ansprüche,
**dadurch gekennzeichnet,**
**dass** als Auswerteinheit (AE) ein Mikrocontroller in dem Kommunikationsmodul (KM) vorgesehen ist.

## Claims

1. Method for querying data with a data call between a service facility and a communications module (KM) by way of a communications network,
**characterised in that**
a data query transmitted by a service facility and received by way of the communications network is forwarded from a first interface unit (CSD) to a further interface unit (AT) of the communications module,
the data query is interpreted in the further interface unit (AT), and the interpretation result is evaluated by an evaluation unit (AE), and
response data for the data query in accordance with the interpretation result are transmitted from the evaluation unit by way of the first interface unit (CSD) to the service facility.

2. Method according to claim 1,
**characterised in that**
the data query is interpreted into at least one control command by the further interface (AT) for the evaluation.

3. Method according to one of the preceding claims,
**characterised in that**
a data call coming from the service facility is accepted by a communications module (KM) by means of automatic call-acceptance.

4. Method according to one of the preceding claims,
**characterised in that**
the first interface unit (CSD) is connected to the further interface unit (AT) in a communications module (KM) by way of a serially crossed data connection (NMK).

5. Method according to one of the preceding claims,
**characterised in that**
a simulation facility is used for the further interface unit (AT) in the communications module (KM).

6. Method according to one of the preceding claims,
**characterised in that**
a microcontroller is used in the communications module (KM) as the evaluation unit (AE).

7. Method according to one of the preceding claims,
**characterised in that**
the communications module (KM) is a mobile radio module for a cellular communications network.

8. Method according to claim 7,
**characterised in that**
a time division multiple access (TDMA)-, a code division multiple access (CDMA)- and/or a Java-capable module that can be logged into a mobile radio network is used as the mobile radio module.

9. Method according to one of the preceding claims,
**characterised in that** the communications module (KM) is an ISDN-, a DECT-, an HSCSD- and/or a similar module of a fixed network.

10. Method according to one of the preceding claims,
**characterised in that** the further interface unit (AT) comprises the evaluation unit (AE).

11. Method according to one of the preceding claims,
**characterised in that**
the location of the communications module (KM), the battery level, the signal strength and/or similar are queried as data.

12. Device (KM) for responding to a data query arriving by way of a communications network from a service facility with a communications module (KM)
- having a first interface (CSD) of the communications module (KM) for receiving a data query transmitted by a service facility and for forwarding the data query to a further interface unit (AT),
- having the further interface unit (AT) of the communications module (KM) for interpreting the data query,
- having an evaluation unit (AE) for generating a data response to the data query in accordance with the interpretation result and for transmitting the data response to the service facility by way of the first interface unit (CSD).

13. Device according to claim 12,
**characterised in that**
a mobile radio module for a cellular communications network is provided as the communications module (KM).

14. Device according to one of the preceding claims,
**characterised in that**
the further interface unit (AT) is provided for interpreting the data query into at least one control command.

15. Device according to one of the preceding claims,
**characterised in that** a serially crossed connection (NMK) is provided as a connection between the first interface unit (CSD) and the further interface unit (AT) in the communications module (KM).

16. Device according to one of the preceding claims,
**characterised in that** a simulation facility (SS) is provided as the further interface unit (AT) in the communications module (KM).

17. Device according to one of the preceding claims,
**characterised in that**
a microcontroller is provided in the communications module (KM) as the evaluation unit (AE).

## Revendications

1. Procédé de consultation de données par un appel de données entre un dispositif de service et un module (KM) de communication par l'intermédiaire d'un réseau de communication,
**caractérisé**
**en ce que** l'on achemine une consultation de données, émise par un dispositif de service et reçue par l'intermédiaire du réseau de communication, d'une première unité (CSD) d'interface à une autre unité (AT) d'interface du module de communication,
**en ce que** l'on interprète la consultation de données dans l'autre unité (AT) d'interface et on exploite le résultat de l'interprétation par une unité (AE) d'exploitation et
**en ce que** l'on envoie de l'unité d'exploitation au dispositif de service, par l'intermédiaire de la première unité (CSD) d'interface, les données de réponse à la consultation de données suivant le résultat de l'interprétation.

2. Procédé suivant la revendication 1,
**caractérisé,**
**en ce que** l'on interprète par l'autre interface (AT) pour l'exploitation les consultations de données en au moins une instruction de commande.

3. Procédé suivant l'une des revendications précédentes, **caractérisé en ce qu'**un appel de données venant du dispositif de service est accepté par acceptation d'appel automatique par un module (KM) de communication.

4. Procédé suivant l'une des revendications précédentes, **caractérisé en ce que** la première unité (CSD) d'interface est reliée à l'autre unité (AT) d'interface dans un module (KM) de communication par l'intermédiaire d'une liaison (NMK) de données croisée en séquence.

5. Procédé suivant l'une des revendications précédentes, **caractérisé en ce que** l'on utilise un dispositif de simulation pour l'autre unité (AT) d'interface dans le module (KM) de communication.

6. Procédé suivant l'une des revendications précédentes, **caractérisé en ce que** l'on utilise comme unité (AE) d'exploitation un microcontrôleur dans le module (KM) de communication.

7. Procédé suivant l'une des revendications précédentes, **caractérisé en ce que** le module (KM) de communication est un module de téléphonie mobile pour un réseau de communication cellulaire.

8. Procédé suivant la revendication 7,
**caractérisé en ce que** l'on utilise comme module de téléphonie mobile un module Time Division Multiple Access (TDMA), un module Code Division Multiple Access (CDMA) et/ou un module Java qui peut être enregistré dans un réseau de téléphone mobile.

9. Procédé suivant l'une des revendications précédentes, **caractérisé en ce que** le module (KM) de communication est un module ISDN, DECT, HSCSD et/ou analogue d'un réseau fixe.

10. Procédé suivant l'une des revendications précédentes, **caractérisé en ce** l'autre unité (AT) d'interface comprend l'unité (AE) d'exploitation.

11. Procédé suivant l'une des revendications précédentes, **caractérisé en ce que** l'on consulte comme données l'emplacement du module (KM) de communication, l'état de la batterie, l'intensité du signal et/ou analogue.

12. Dispositif (KM) pour répondre à une consultation de données venant, par l'intermédiaire d'un réseau de communication, d'un dispositif de service ayant un module (KM) de communication
- comprenant une première interface (CSD) du module (KM) de communication pour la réception d'une consultation de données émises par un dispositif de service et pour l'acheminement de la consultation de données à une autre unité (AT) d'interface,
- comprenant l'autre unité (AT) d'interface du module (KM) de communication pour l'interprétation de la consultation de données,
- comprenant une unité (AE) d'exploitation pour élaborer une réponse de données à la consultation de données suivant le résultat de l'interprétation et pour envoyer la réponse de données au dispositif de service par l'intermédiaire de la première unité (CSD) d'interface.

13. Dispositif suivant la revendication 12,
**caractérisé**
**en ce qu'**il est prévu comme module (KM) de communication un module de téléphone mobile pour un réseau de communication cellulaire.

14. Dispositif suivant l'une des revendications précédentes,
**caractérisé en ce que** l'autre unité (AT) d'interface est prévue pour l'interprétation de la consultation de données en au moins une instruction de commande.

15. Dispositif suivant l'une des revendications précédentes,
**caractérisé en ce qu'**il est prévu, comme liaison entre la première unité (CSD) d'interface et l'autre unité (AT) d'interface dans le module (KM) de communication, une liaison (NMK) croisée en séquence.

16. Dispositif suivant l'une des revendications précédentes,
**caractérisé en ce qu'**il est prévu, comme autre unité (AT) d'interface dans le module (KM) de communication, un dispositif (SS) de simulation.

17. Dispositif suivant l'une des revendications précédentes,
**caractérisé en ce qu'**il est prévu, commun unité (AE) d'exploitation, un microcontrôleur dans le module (KM) de communication .
